# EUROPEAN PATENT SPECIFICATION

(11) **EP 2 332 305 B1**
(45) Date of publication and mention of the grant of the patent: **07.05.2014**
(21) Application number: 09807497.4
(22) Date of filing: 25.08.2009
(51) Int. Cl.: H04L 27/24, H04B 3/54

(54) **METHOD AND APPARATUS FOR THE EXCLUSIVE IDENTIFICATION OF CONTROL SIGNALS IN A RAILWAY ELECTRIC LINE**
VERFAHREN UND VORRICHTUNG ZUR AUSSCHLIESSLICHEN IDENTIFIZIERUNG VON STEUERSIGNALEN BEI EINER ELEKTRISCHEN LEITUNG FÜR EISENBAHNSIGNALE
PROCÉDÉ ET DISPOSITIF D'IDENTIFICATION EXCLUSIVE DE SIGNAUX DE COMMANDE LE LONG D'UNE LIGNE DE CHEMIN DE FER ÉLECTRIQUE

(30) Priority: 28.08.2008 IT MI20081549
(43) Date of publication of application: 15.06.2011
(73) Proprietor: Sirti S.p.A., 20127 Milano (IT)
(72) Inventor: MORELLI, Maurizio, I-16138 Genova (IT); TRENTINI, Daniele, I-16149 Genova (IT)
(74) Representative: Di Gennaro, Sergio
(86) International application number: PCT/IB2009/006644
(87) International publication number: WO 2010/035088

(56) References cited:
- GB-A- 1 527 073
- US-A- 4 467 314
- US-A- 4 528 667
- US-B1- 6 570 493

## Description

The present invention refers to a method and to an apparatus for encoding a signal on an electric line for railway signals.

The present method is capable of exclusively identifying the correct power supply between a central unit and a plurality of signal devices, such as for example the light signal lamps, and controlling the soundness of such connections and - only in case no problems are detected - electric connection from the central unit or control apparatus to such Field controller units.

Usually, the cabling from the control station to the various Field controller units is obtained through a plurality of sheets passing through which is one or more cables each bearing a power supply and/or control signal for a respective controller unit. At times, given the environment strongly subjected to external interferences, such as for example the passage of trains, various kinds of maintenance operations that imply excavating and invasive operations on the ground on which such sheaths lie, the insulation layer of each cable may possibly end up being damaged. Should such event occur, the control signal or direct power supply to a specific controller unit may be sent in a non-unique manner thereto, but received also by a different controller unit (and vice versa) due to such lack of insulation caused by such damage - even partial - on the cable. Thus, the consequence is that in order to avoid potentially hazardous situations all controller units involved in the malfunction are deactivated from the control unit, hence disabling the corresponding line section.

Furthermore, the measurement environment is extremely noisy - just imagine the traction noise of electric locomotives - and the measurement method must be practically immune to noise signals even of high levels.

The Applicant thought of how a control unit may be enabled to identify an event of such type, in order to intervene promptly to monitor and/or solve the malfunction.

Document US6570493B1 proposes a method and a system for controlling the connection of an electric load to the power supply line provided with an unambiguous code for that particular electric load. Obviously, in a noisy environment like the one described above even this system could fail to signal the correct information in that the unambiguous code could erroneously not be received both in case of strong electric noise and in case of short-circuit with a power supply cable meant for an electric load and thus with another unambiguous code.

The present invention overcomes the abovementioned drawbacks by providing a system wherein transmitted on the cable coming from the control unit that supplies the Field controller units is an unambiguous digital word for each of the Field controller units to be supplied using the CDMA (Code Division Multiple Access) encoding.

Such encoding is currently used for encoding signals in mobile phones and it is substantially a technique for access, by several sources of information, to the same transmission channel, by using the same frequency band, which consists in associating - to the information transmitted by each of these sources - a code capable of identifying it in a unique manner with respect to the rest and capable of allowing a receiver, to selectively extract information associated to each of them.

In such manner, it is possible to monitor whether - in a determined cable for supplying a Field controller unit - there is a supply signal not intended to supply this controller unit, or a signal due to malfunction. Advantageously, in case of detection of a further presence of a different code word apart from the one provided for, it is possible to intervene on the line cutting off power supply.

An aspect of the present invention regards an apparatus for exclusive identification of control signals along an electric line according to the characteristics of claim 1.

A further aspect of the present invention regards a method for exclusive identification of control signals along an electric line according to the characteristics of claim 6.

Characteristics and advantages of the method and apparatus according to the present invention shall be more clear and apparent from the following description, exemplifying and non-limiting, of an embodiment provided with reference to the attached figure which represents a block diagram of the apparatus according to the invention.

With reference to the abovementioned figure the apparatus according to the present invention is applied on a power supply line A which controls a Field controller unit (represented by the circuit of a lamp L in the exemplified case in question) and a control unit C adapted to generate the power supply signal.

The power supply signal is typically an alternating voltage having for example a 50 Hz, 83.3 Hz frequency or other frequencies. The apparatus according to the present invention comprises a circuit for transmitting such power supply signal adapted to associate an unambiguous and orthogonal code word thereto. Such transmission may be generated through phase modulation, case (a) or through amplitude modulation, case (b).

Case (a) consists in providing a preset number of positive and negative half-waves of such alternating current according to a predetermined sequence. In particular, a so-called spread word S, for example made up of 16 chips, wherein each chip is equivalent to a sinusoidal cycle at the considered frequency, wherein the chip with value "1" provides for the sinusoidal cycle at the considered frequency with zero-phase, while the chip with value "0" provides for the sinusoidal cycle with phase 180°.

Case (b) consists in providing a preset number of pulses (bits) having a defined duration, for example 20 msec, which is multiplied by a carrier sinusoidal signal having a multiple frequency with respect to the bit frequency, with amplitude of suitable value. In particular, generated is a so-called spread word S, for example made up of 16 chips, where for each value logic "1" bit there is the presence of the carrier while for each logic "0" bit there is no carrier. Advantageously, each unambiguous digital word is orthogonal to the others. According to the present invention, the term orthogonal is used to indicate that the scalar product between two orthogonal words is zero. Exploiting such property, the present invention proposes detecting (extracting) the power supply signal from each power supply cable of a lamp. Under normal conditions, such signal must contain an unambiguous word or may contain several unambiguous words (in case of malfunction).

By carrying out the scalar product between such signal and the various unambiguous words, the presence of a correct unambiguous word may be verified and thus detect the power supply signal insulating it from noise. In addition, other power supply signals may be detected, verifying the presence of one or more other unambiguous words, due for example to the deterioration of the electric insulation between the cables.

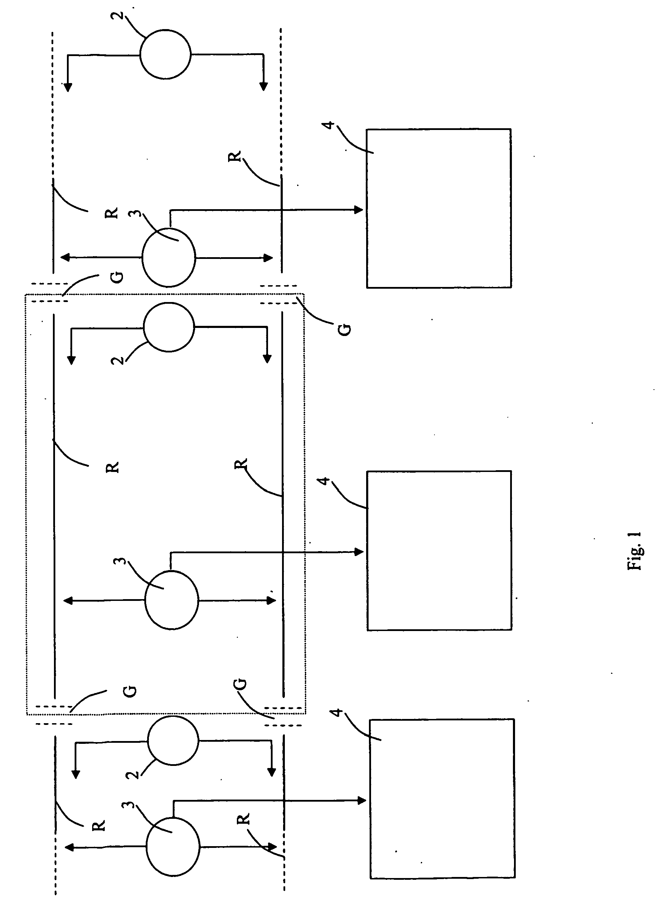

After such verification, should malfunction be detected, the apparatus may emit a disabling signal to be used to cut-off the power supply of such lamp, for example by suitably commanding a control relay. Illustrated in figure 1 is an embodiment of apparatus according to the present invention comprising a first block 2 for extracting the signal from power supply line A, a first processing block 3 and a first power supply block 4.

Furthermore, the apparatus also comprises a second block 2' for extracting the signal from the power supply line A, a second processing block 3' and a second power supply block 4'. The first 2, 3 and 4 and second blocks 2' 3' and 4' operate parallel with respect to each other, thus the signal is extracted and processed twice, and the processing operations carried out are compared to each other by means of a comparison block 5, suitable to ascertain coincidence thereof and thus activate a control block 6.

In particular, the power supply block 3 supplies direct voltage to the other blocks of the apparatus and comprises a diodes rectifier bridge connected to the power supply line A which carries out the AC/DC conversion. The signal extraction block may suitably comprise a block for amplifying and filtering the signal extracted from the line and a timer block T capable of monitoring the signal for a period of time sufficient to intercept the unambiguous word for example in case there is an intermittent power supply signal.

The extracted signal is subsequently sent to the processing block which comprises a microprocessor and at least one analogue/digital converter for such extracted signal.

Comparison between the extracted signal and the previously memorised unambiguous codes is carried out in such processing block 3 or 3', preferably digitally, verifying the presence of the unambiguous word/s received emitting a signal for identifying the words themselves. Such signal may be sent to the comparison block 5 for comparison with the analogous signal obtained from the second blocks.

Finally, the apparatus according to the present invention present on the field controller unit, when in the condition of identifying solely its unambiguous word, shall maintain an electromechanical or electronic switch for connecting the field controller unit with the cable coming from the control unit energised, while in case the presence of one or more unambiguous word is detected it shall deactivate the energising of such switch.

The apparatus according to the present invention may be applied to each lamp in such a manner that it is the lamp itself to "be disconnected" by deactivating such relay. Alternatively, the apparatus may solely communicate the presence of malfunction and leave the task of disconnecting the Field controller unit in question to the control unit.

## Claims

1. Apparatus for exclusive identification of control signals in an electric railway line along an alternating current power supply (A), consisting of a plurality of power cables, each cable connecting a central unit (C) to a single signal device (L) of a plurality of signal devices (L), the apparatus comprising a circuit for transmitting such power supply signals adapted to associate to each of the power supply signals an unambiguous code word to each device to be supplied with power which consists in providing a phase modulation or an amplitude modulation in the alternating power supply signal, at least a block (2,2') for extracting the power supply signal from each cable of the line and at least one processing block (3,3') adapted to compare such predetermined unambiguous codes with the extracted signals,
**characterized in that** the unambiguous code word associated to each power cable is orthogonal with respect to the one associated to another cable.

2. Apparatus according to claim 1, further comprising at least one power block (4,4') which supplies a direct current to the other blocks of the apparatus and comprises a bridge for rectifying the diodes connected to the power supply line (A) which performs the AC/DC conversion.

3. Apparatus according to claim 1, wherein the block for extracting the signal comprises a block for amplifying and filtering the signal extracted from the line and a timer block T, capable of monitoring the signal for a period of time sufficient to intercept the unambiguous orthogonal word

4. Apparatus according to claim 1, wherein the power supply signal is extracted and processed at least twice, through first and second extraction and processing blocks, and the processing results are compared to each other through a comparison block (5), adapted to check their coincidence and thus activate a control block (6).

5. Apparatus according to claim 1, wherein the processing block comprises a microprocessor and at least one analogue/digital converter for such extracted signal.

6. Method for exclusive identification of control signals in an electric railway line along an alternating current power supply line (A), consisting in a plurality of power cables, each cable connecting a central unit (C) to a single signal device (L) of a plurality of signal devices (L), **characterized in that** it comprises the following steps:
a) transmitting an alternating current supply signal on each of said cables,
b) associating an unambiguous code word to each of such signals, providing a phase modulation or an amplitude modulation in the alternating power supply signal according to a predetermined sequence, the unambiguous code word associated to each power cable being orthogonal with respect to the one associated to another cable,
c) extracting the power supply signal from such line,
d)comparing such signal with the previously stored unambiguous code words,
e) detecting the presence of one or more code words in said extracted signal,
f) emitting a signal for identifying the detected words.

7. Method according to claim 6, further comprising the step of disconnecting the signal device in case the presence of several unambiguous words is detected in the power supply signal extracted from the power cable of such device.

## Patentansprüche

1. Vorrichtung zur ausschließlichen Identifizierung von Steuersignalen bei einer elektrischen Leitung für Eisenbahnsignale entlang einer Wechselstromversorgung (A), bestehend aus einer Mehrzahl von Stromkabeln, jedes Kabel eine zentrale Einheit (C) mit einer einzelnen Signaleinheit (L) aus einer Mehrzahl (L) von Signaleinheiten verbindend, die Vorrichtung umfassend
- einen Schaltkreis, zum Übermitteln solcher Stromversorgungssignale, geeignet um jedem der Stromversorgungssignale ein unzweideutiges Codewort zu jeder der mit Strom zu versorgenden Einheiten zuzuordnen, welches aus einer Phasenmodulation oder einer Amplitudenmodulation des Wechselstromsignals besteht,
- mindestens einem Extraktionsblock (2, 2`) um das Stromversorgungssignal aus jedem Kabel der Leitung zu extrahieren, und
- mindestens einem Verarbeitungsblock (3, 3'), angepasst um solche vorgegebenen unzweideutigen Codes mit den extrahierten Signalen zu vergleichen, **dadurch gekennzeichnet, dass** das unzweideutige Codewort, das jeweils einem Stromkabel zugeordnet ist, orthogonal im Bezug auf das einem anderen Kabel zugeordneten Codewort ist.

2. Vorrichtung nach Anspruch 1,
**dadurch gekennzeichnet, dass** mindestens ein Leistungsblock (4, 4`) vorgesehen ist, welcher einen Gleichstrom zu den anderen Blöcken der Vorrichtung zur Verfügung stellt und eine Brücke zur Gleichrichtung der an die Wechselstromversorgung (A) angeschlossenen Dioden umfasst, welche die Wechselstrom-Gleichstrom Umwandlung durchführt.

3. Vorrichtung nach Anspruch 1,
**dadurch gekennzeichnet, dass** der Extraktionsblock einen Block zur Verstärkung und Filterung des aus der Leitung extrahierten Signals umfasst sowie einen Zeitschaltuhrblock T, der in der Lage ist, das Signal über eine Zeitdauer zu überwachen, die ausreichend ist, das unzweideutige orthogonale Wort abzufangen.

4. Vorrichtung nach Anspruch 1,
**dadurch gekennzeichnet, dass** erste und zweite Extraktions- und Verarbeitungsblöcke das Stromversorgungssignal mindestens zweimal extrahieren und verarbeiten, und dass ein Vergleichsblock (5,5') die Verarbeitungsergebnisse miteinander vergleicht, wobei der Vergleichsblock geeignet ist, deren Übereinstimmung festzustellen und demnach einen Steuerblock (6) zu aktivieren.

5. Vorrichtung nach Anspruch 1,
**dadurch gekennzeichnet, dass** der Verarbeitungsblock einen Mikroprozessor und mindestens einen analog-digital-Wandler für solch ein extrahiertes Signal umfasst.

6. Verfahren zur ausschließlichen Identifizierung von Steuersignalen bei einer elektrischen Leitung für Eisenbahnsignale entlang einer Wechselstromversorgung (A), bestehend aus einer Mehrzahl von Stromkabeln, jedes Kabel eine zentrale Einheit (C) mit einer einzelnen Signaleinheit (L) aus einer Mehrzahl (L) von Signaleinheiten verbindend,
**dadurch gekennzeichnet, dass** es die folgenden Schritte umfasst:
a) Übermitteln eines Wechselstromsignals auf jedem der genannten Kabel,
b) Zuordnen eines unzweideutigen Codeworts zu jedem solcher Signale, gemäß einer vorgegebenen Sequenz, wobei das unzweideutige Codewort, das jeweils einem Stromkabel zugeordnet ist, orthogonal in Bezug auf dem zu einem anderen Kabel zugeordneten Codewort ist,
c) Extraktion des Stromversorgungssignals von einer solchen Leitung,
d) Vergleich eines solchen Signals mit dem zuvor gespeicherten unzweideutigen Codewort,
e) Erkennung des Vorhandenseins von einem oder mehreren Codewörtern in dem genannten extrahierten Signal,
f) Aussendung eines Signals zur Identifizierung der erkannten Wörter,
g) Versehen einer Phasenmodulation oder einer Amplitudenmodulation in dem Wechselstromsignal.

7. Verfahren nach Anspruch 6,
**dadurch gekennzeichnet, dass** zusätzlich der Schritt mit umfasst ist, dass die Signaleinheit abgetrennt wird, falls die Präsenz mehrerer unzweideutiger Wörter in dem aus der Stromleitung einer solchen Einheit extrahierten Stromversorgungssignal erkannt wird.

## Revendications

1. Appareil permettant l'identification exclusive de signaux de commande dans une ligne ferroviaire électrique le long d'une alimentation en courant alternatif (A), consistant en une pluralité de câbles d'alimentation, chaque câble connectant une unité centrale (C) à un seul dispositif de signal (L) d'une pluralité de dispositifs de signal (L), l'appareil comprenant un circuit permettant de transmettre de tels signaux d'alimentation adapté pour associer à chacun des signaux d'alimentation un mot de code non ambigu à chaque dispositif devant être alimenté, qui consiste en la fourniture d'une modulation de phase ou d'une modulation d'amplitude dans le signal d'alimentation en courant alternatif, au moins un bloc (2, 2') permettant d'extraire le signal d'alimentation de chaque câble de la ligne et au moins un bloc de traitement (3, 3') adapté pour comparer de tels codes non ambigus prédéterminés aux signaux extraits,
**caractérisé en ce que** le mot de code non ambigu associé à chaque câble d'alimentation est orthogonal par rapport à celui associé à un autre câble.

2. Appareil selon la revendication 1, comprenant en outre au moins un bloc d'alimentation (4, 4') qui alimente en courant continu les autres blocs de l'appareil et comprend un pont permettant de rectifier les diodes connectées à la ligne d'alimentation (A) qui réalise la conversion AC/DC.

3. Appareil selon la revendication 1, dans lequel le bloc permettant d'extraire le signal comprend un bloc permettant d'amplifier et de filtrer le signal extrait de la ligne et un bloc de temporisation T, pouvant surveiller le signal pendant une période suffisante pour intercepter le mot orthogonal non ambigu.

4. Appareil selon la revendication 1, dans lequel le signal d'alimentation est extrait et traité au moins deux fois, par l'intermédiaire de premiers et seconds blocs d'extraction et de traitement, et les résultats de traitement sont comparés les uns aux autres par l'intermédiaire d'un bloc de comparaison (5), adapté pour vérifier leur coïncidence et ainsi activer un bloc de commande (6).

5. Appareil selon la revendication 1, dans lequel le bloc de traitement comprend un microprocesseur et au moins un convertisseur analogique/numérique pour un tel signal extrait.

6. Procédé d'identification exclusive de signaux de commande dans une ligne ferroviaire électrique le long d'une ligne d'alimentation en courant alternatif (A), consistant en une pluralité de câbles d'alimentation, chaque câble connectant une unité centrale (C) à un seul dispositif de signal (L) d'une pluralité de dispositifs de signal (L), **caractérisé en ce qu'**il comprend les étapes suivantes :
a) transmission d'un signal d'alimentation en courant alternatif sur chacun desdits câbles,
b) association d'un mot de code non ambigu à chacun de tels signaux, fourniture d'une modulation de phase ou d'une modulation d'amplitude dans le signal d'alimentation en courant alternatif selon une séquence prédéterminée, le mot de code non ambigu associé à chaque courant d'alimentation étant orthogonal par rapport à celui associé à un autre câble,
c) extraction du signal d'alimentation d'une telle ligne,
d) comparaison d'un tel signal avec les mots de code non ambigus précédemment stockés,
e) détection de la présence d'un ou plusieurs mots de code dans ledit signal extrait,
f) émission d'un signal d'identification des mots détectés.

7. Procédé selon la revendication 6, comprenant en outre l'étape consistant à déconnecter le dispositif de signal dans le cas où la présence de plusieurs mots non ambigus est détectée dans le signal d'alimentation extrait du câble d'alimentation d'un tel dispositif.
